# EUROPEAN PATENT APPLICATION

(11) **EP 4 481 337 A1**
(43) Date of publication of application: **25.12.2024**
(21) Application number: 24183098.3
(22) Date of filing: 19.06.2024
(51) Int. Cl.: G01F 23/24, G01F 23/263, B60C 9/12, B60C 19/12, B60C 23/04, B60C 23/00

(54) **LIQUID HEIGHT LEVEL SYSTEM**

(30) Priority: 19.06.2023 US 202318211321; 30.07.2023 US 202318227932; 18.06.2024 US 202418746813
(71) Applicant: Haronian, Dan, 9043500 Efrat (IL)
(72) Inventor: Haronian, Dan, 9043500 Efrat (IL)
(74) Representative: Lapienis, Juozas

(57) **Abstract**

A system for detecting a presence of liquid inside a wheel that includes a power source, an electric circuit and an indication means, and a tire pressure valve that includes a stem, a first electrode and a second electrode, an isolation part between the electrodes, and a pressure valve mechanism. The tire pressure valve is fixed to the rim of the wheel in such a way that upper parts of the electrodes are positioned outside the rim and lower parts of the electrodes are positioned inside the wheel and immersed inside liquid inside the tire when the tire pressure valve faces the ground. The upper parts of the electrodes are connected to the power source, and to the electric circuit that outputs a signal when liquid presence between the electrodes and the indication means indicates when the electric circuit outputs such signal.

## Description

### BACKGROUND OF THE INVENTION

Sealing liquid is used for sealing holes created in closed flexible and inflated structures such as tubeless tires for vehicles. The sealing liquid is inserted inside the tire and seals holes or gaps that are created during the operation of the tire. In addition, the water content of the liquid may evaporate over time. Since the tire is sealed it is impossible to know the liquid level and its properties which make it hard to control the quality of this solution.

### SUMMARY OF THE INVENTION

This patent application is related to sealing liquid measuring system that is based on measuring the liquid electric properties such as resistance or capacitance. The system uses electrodes inserted inside the tire and measures the level of the liquid either in real time or at rest and at specific position of the tire.

### BRIEF DESCRIPTION OF THE DRAWINGS

FIG. 1 depicts a general embodiment of this invention.
FIGS 2a and 2b depict schematically embodiment of measuring liquid height level.
FIG. 3 is a graphic description of calculated sensor sensitivity function.
FIG. 4 is a graphic description of measurement of voltage drop on R2 in the circuit described in Figures 2a and 2b for different level of liquid heights.
FIGS 5a and 5b are a graphic description Voltage on R2 as a function of the liquid height.
FIG. 6 depicts a general embodiment dielectric liquid capacitance using resonator.
FIG. 7 depicts one embodiment of dielectric liquid capacitance using resonator.
FIG. 8 depicts another embodiment of dielectric liquid capacitance using resonator.
FIG. 9 depicts yet another embodiment of dielectric liquid capacitance using resonator.
FIG. 10 depicts an embodiment of liquid height level measuring system in a tire.
FIG. 11 depicts another embodiment of liquid height level measuring system in a tire.
FIGS 12a, 12b and 12c depict an embodiment of a plug in system for measuring liquid level in a tire.
FIG. 13 is a schematic description of components of the plug-in device described in Figures 12a-12c.
FIG. 14 depicts a system for measuring liquid level in a tire, fixed to the tire rim.
FIG. 15 describes schematic components of the plug-in device described in Figure 14.
FIGS 16 - 17 describe schematically the pressure tire valve 64 inside the tire.
FIG. 18 describes schematically the stem 64S and the extensions.
FIG. 19 describes schematically the pressure tire valve 64 inside the tire.

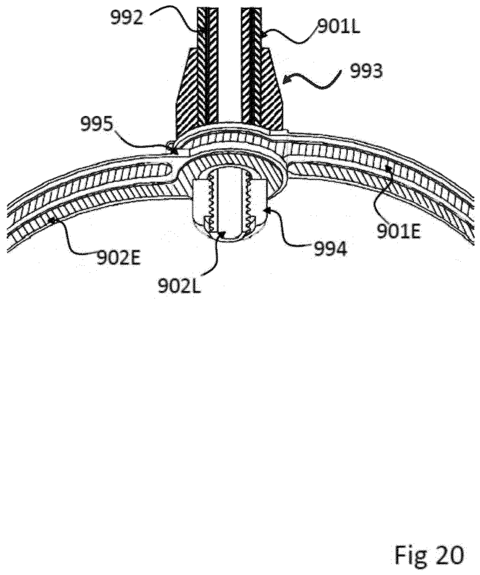

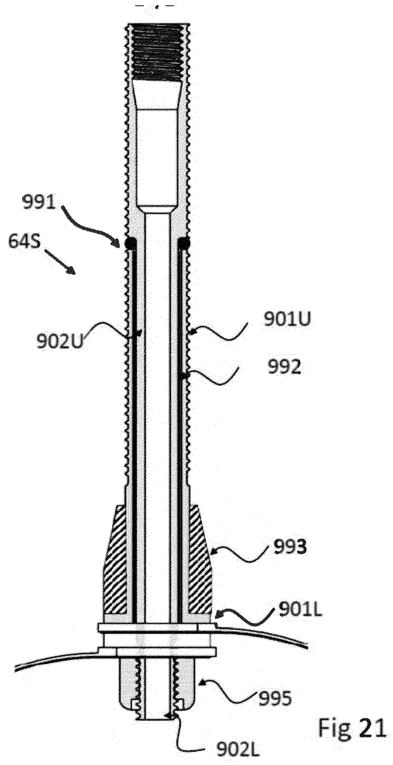

FIGS 20 - 21 describe schematically the stem 64S and the extensions.
FIG. 22 depicts schematically the in-tire system (800).
FIG. 23 is a graphic description of the in-tire system (800).

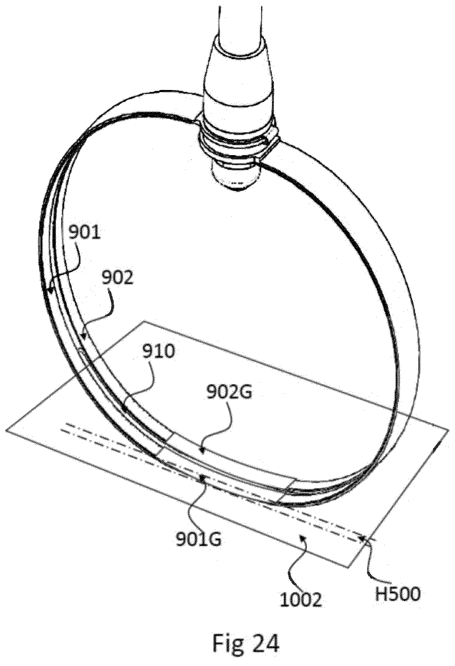

FIG. 24 depicts schematically the electrodes.
FIG. 25 depicts schematically the at least one electrodes 901A.
FIG. 26 depicts schematically the secondary circuits (1111) and the LEDs (1004A).
FIG. 27 depicts schematically another embodiment with the one electrode (950).
FIG. 28 depicts the electrical circuit that the other embodiment comprises.

### DETAILED DESCRIPTION OF THE INVENTION

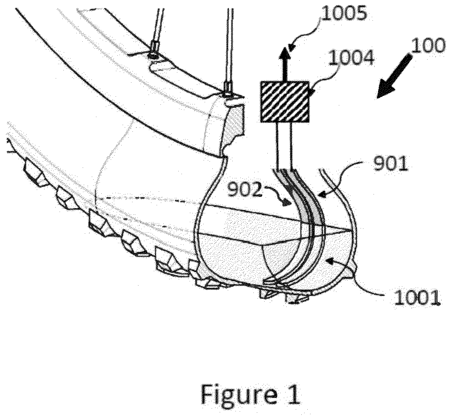

The present invention refers to a system for measuring the level or volume of sealing liquid inside closed volumes such as inside an inflation tire mounted on a rim. In this patent application the invention will be described on a bicycle tire, but it is clear that this patent application may be applied to any system that uses inflation tire. A general embodiment is described in Figure 1. The system comprises two electrodes immersed inside the liquid for measuring an electric property of the said liquid, and an electric circuit with output signal such that said electric property depends on the liquid height level and such that the said electric property affects the intensity of said output signal and such that said output signal is a measure to the liquid height level. The electrodes may be made of conductive flexible material such as conductive polymer or polymer with imbedded thin metal sheet.

Most sealing liquid are electrically conductive. Resistance measurement of a conductive material with input port and output port is done by applying DC voltage between the two ports and measuring the current flowing through the conductive material. Dividing the voltage drop by the current is the resistance of the conductive material. Measuring the resistance of a conductive liquid by measuring the resistance between two electrodes immersed inside the liquid may lead to breakdown of the liquid and sedimentation of the back down materials on the electrodes and is therefore not applicable. In order to avoid such problems, the present invention teaches measuring the resistivity by applying a short voltage pulse. These pulses may comprise positive and negative parts that may create a short back and forth drift and will not affect the liquid properties.

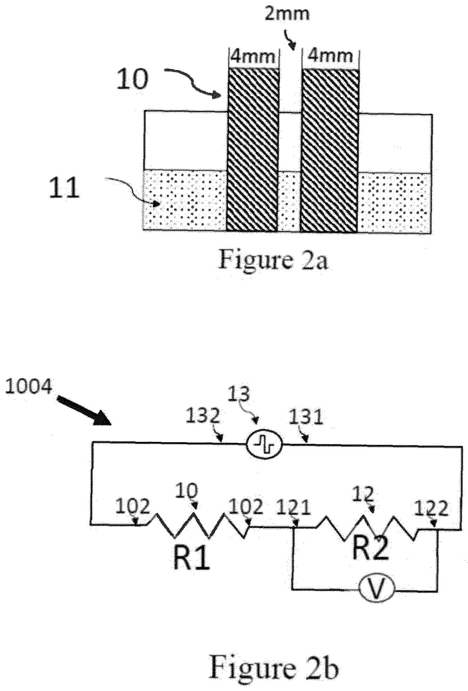

Figure 2a describes two electrodes (10) immersed in liquid (11) with given volume resistance. In this specific design of the electrodes are 4mm wide and 2mm apart. The resistance between two electrodes is denoted by R1. As water in the liquid evaporates, the level of liquid drops and R1 changes and therefore its value may be used as a measure to the liquid height.

Where ρ is the liquid resistivity that depends on the volume concentration of ions and free electrons. As water evaporates the concentration of ion and free electrons increase and therefor the liquid resistivity decreases. L is the distance between the two electrodes, w is liquid height level (length of liquid in contact with the electrodes) and f(h) is a value that is function of the height above the plan of the electrodes.

Since L is constant and it is possible to assume that is fixed as well, we find that R1 depends and since both and w decrease as water evaporate, we find that ρ have opposite effect on R1. Yet, the change in ρ is weaker since it affects the volume of the liquid. We therefore find that R1 increases as the liquid level drops.

Figure 2b describes one example of a circuit (1004) for measuring R1. In this example the two electrodes (10) are connected in series to a load resistor R2. A voltage pulse is applied by a voltage source and the voltage drop on R2 is measured by a voltage meter (13).

The current flowing in the circuit is, and therefore the voltage drop on R2 is. Since V, and R2 are known, by measuring it is possible to find the value of R2.

One question is the sensitivity of to changes in R1 due to liquid height level.

The derivative of relative to R1 is by comparing this derivative to zero we find that the maximum sensitivity is when R2=R1.

Since R1 is the resistivity between the two electrodes and its value changes as the level of the liquid changes, the optimal value of R2 is not constant.

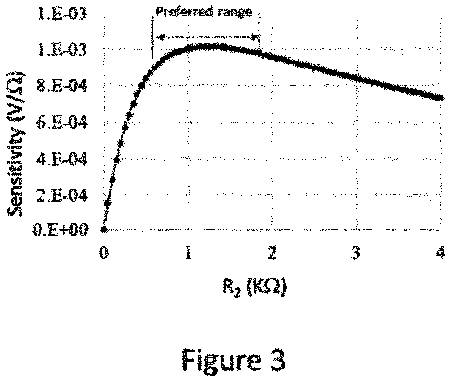

In case of the two electrodes described in Figure 2a and for liquid ECO SEALANT manufactured by company called JOE'S. The liquid mostly contains water. It is founded that the liquid resistance R1 is 0.71KΩ at liquid height of 21mm and after water evaporation and liquid height level dropped to 17mm, the liquid resistance R1 was measured to be 1.26KΩ. Figure 3 shows the sensitivity as a function of R2 for R1=1.5KΩ. As shown in Figure 3 the peak of the sensitivity function relatively wide around R2=1.5KΩ. In addition, the slope of the sensitivity function for R2>1.5KΩ is much smaller than that for R2<1.5KΩ and therefore R2 that is a bit higher than 1.5kΩ will also generate high sensitivity response to changes in R1.

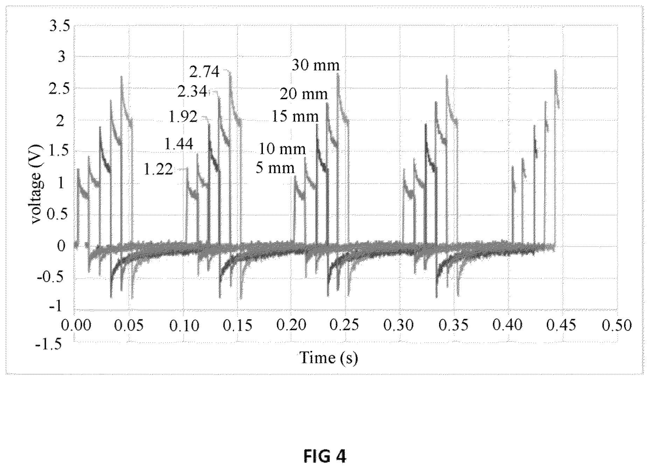

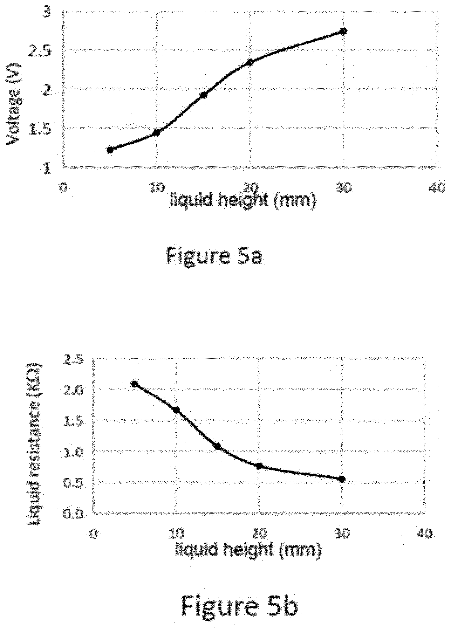

Figure 4 describes the voltage measured on R2 in the circuit described in Figure 1b, for different ECO SEALANT liquid height level. The change in the height level in this experiment is due to a change in water content of the liquid and therefore represents evaporation of the water during normal use of the liquid. The voltage source is a 2ms wide, 5V pulse at 10Hz rate. Figure 5a described the peak of the voltages shown in Figure 4 as a function the liquid height and Figure 5b describes the resistance of ECO SEALANT liquid as function of the liquid height.

The preferred pulse width is also a function of the resistance of resistor R2. If we ignore the optimal point as described above, and use a higher resistance for R2, the current flowing through the liquid will smaller and the pulse may be larger. For example, for the ECO SEALANT liquid with R2=50KΩ, the pulse width may as high as 1-2 seconds.

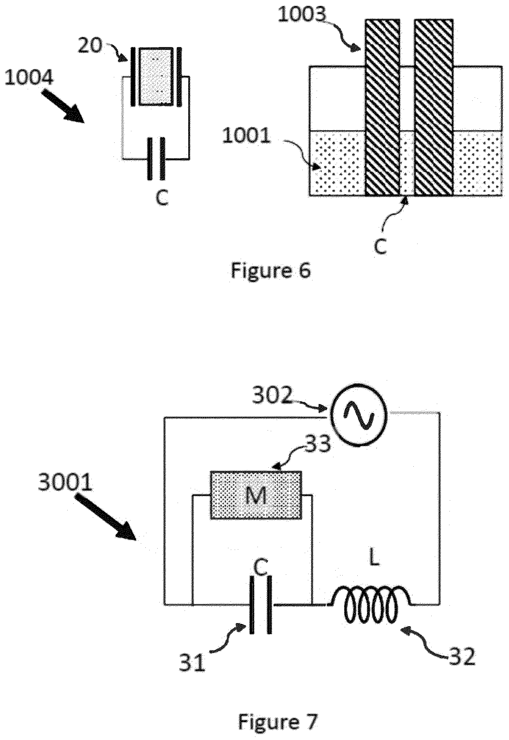

For dielectric, non-resistive liquids the liquid height level may be measured through the change in the capacitance between two electrodes immersed inside the liquid. This can be done for example by using the circuit (1004) shown in Figure 6 that describes a general embodiment for measuring capacitance. This embodiment describes a system for measuring height of dielectric liquid using an oscillator (20) connected two electrodes (1003) immersed inside liquid (1001). The capacitance between the two electrodes depends on the height of the liquid and the frequency of the oscillator (20) depends on the capacitance between the two electrodes. Therefore, changes in the frequency of the oscillator are a measure to the changes in the liquid height.

Another embodiment of this invention is shown in Figure 7. Here a system for measuring dielectric liquid height level (3001) comprising a capacitor C (31) that is the capacitance between two electrodes immersed inside the dielectric liquid, and inductor L (32) with known value, both forming an LC resonator. The resonance frequency of the resonator is A power source (30) is connected in series to the inductor and to the capacitor. An oscillating voltage source (30). By Sweeping the oscillating frequency of the voltage source a peak in the voltage drop is found for example by measuring the voltage drop on the inductor or as shown in Figure 7 by measuring the voltage drop on the capacitor using a meter (33). Since L is known and fr is found from sweeping the frequency spectrum, C can be determined, as well as changes in C that reflects changes in the liquid height.

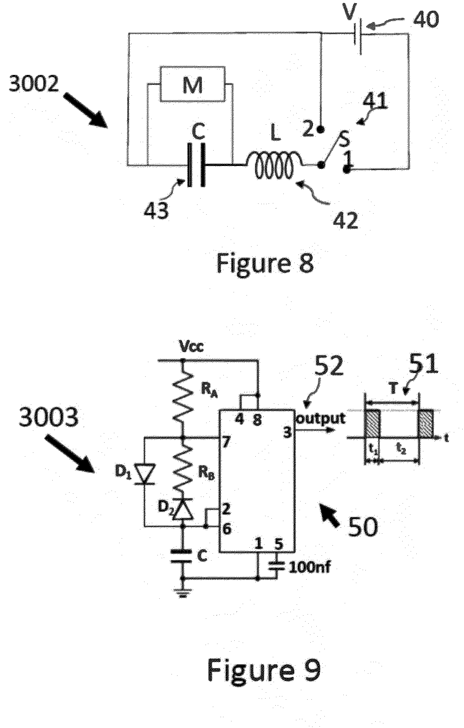

In another embodiment of the embodiment descried in Figure 8, a dielectric liquid height measuring system (3002) comprises a DC power source (40). The capacitor (43) is the capacitor formed between two electrodes immersed inside a dielectric liquid. Inductor (42) is an inductor with known value. By flipping switch (41) to state 1, the power source is connected to the inductor and to the capacitor circuit and the capacitor is charged to voltage V of the DC voltage source. Flipping switch (41) to state 2 disconnect the power source and connect the capacitor to the inductor that excites a resonant oscillation of current flow between the inductor and the capacitor. Typically, these oscillation dies out as a results of internal resistance R of the inductor, the capacitor, and the wires. The frequency of the oscillating current is a function of the inductance L, the capacitance C and to small extent on the resistance R. Since the value of the inductor L is fixed and R is either fixed or negligible, it is possible to determine the capacitance between the two electrodes. Therefore, changes in the capacitance due to liquid height is reflected by changes in the current oscillating frequency. In another embodiment the inductor L, the capacitor C and the power source are connected to each other in parallel.

Figure 9 describes another embodiment of a system for measuring dielectric liquid height (3003) comprising a 555 timer chip (50) designed as an oscillator with oscillating frequency that depends on capacitance C, between two electrodes immersed inside the dielectric liquid. The time interval T (51) at the output (52) from the 555 timer chip is T=t₁+t₂=0.693RaC+0.693RbC, and the frequency of the oscillator is ... Since RA and RB are known, the liquid height may be determined through changes in the oscillating frequency of the oscillator due to change in the capacitance C.

The sensitivity of the oscillator to changes in the capacitance C and therefore in the liquid height is. It is therefore preferred to use low values for resistors.

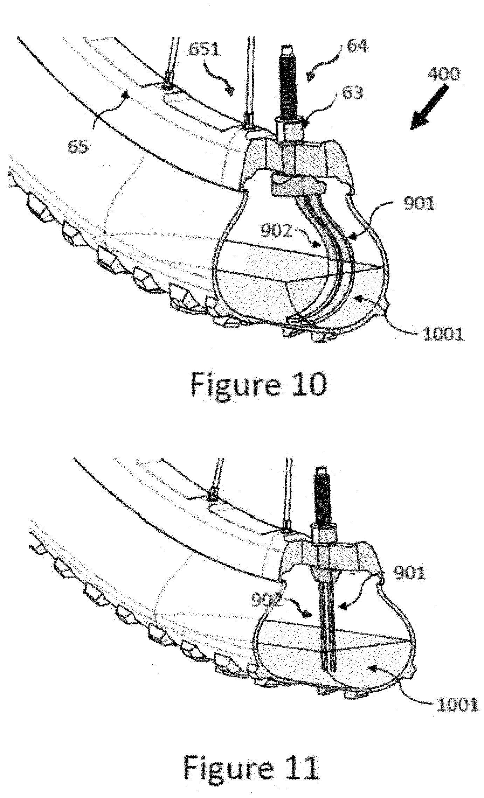

One embodiment of the system (400) for measuring the height level of sealant of a conductive liquid sealant or dielectric sealant (1001) is described in Figure 10. The first electrode (901) and the second electrode (902) are positioned inside the tire (1002) and are passed or being a part of the stem (64S) of the tire pressure valve (64) that is fixed to the rim (65). The electrodes allow measurement of electric properties such as resistance or capacitance electric circuit (1004) shown schematically in Figure 1 and in details in Figure 2 through 9. The measurement may be done when the valve is facing the ground and the liquid accumulate around the electrodes or it can be done during wheel rotation where the analysis for converting the electric property of the liquid to liquid level is different.

Fixing the electrodes to the side of the tire is preferable in order to prevent interference of liquid flow. Yet, the electrodes may also have different geometry such as shown in Figure 11 with vertical electrodes (10031).

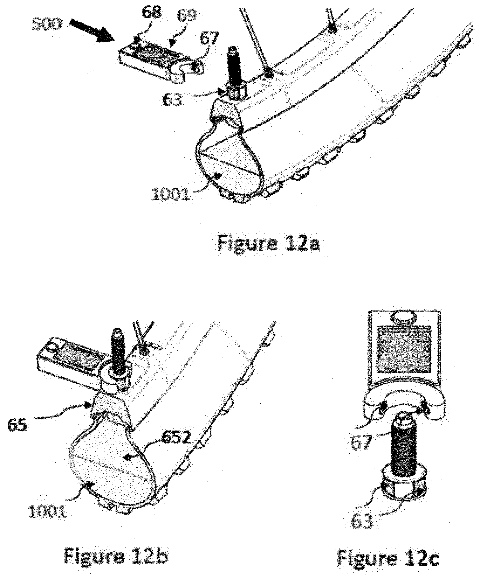

Another embodiment of a system for measuring the height of sealant (liquid) (1001) through its electric properties is described in Figures 12 (a) - 12(c), showing an external plugin module (500) with electric pads (67) that are designed to be connected to the electrodes on a connector (63) that is connected to the electrodes for measuring the liquid level height through its electrical properties.

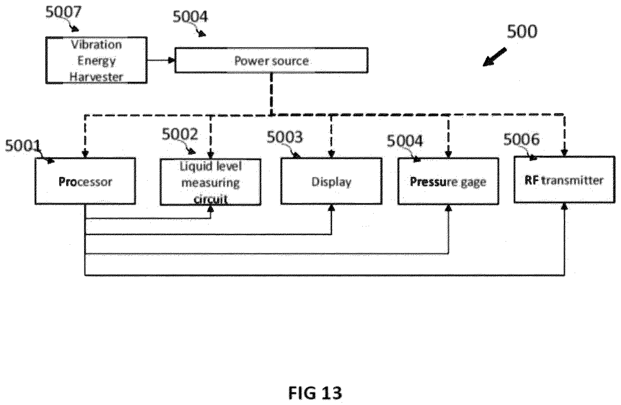

A schematic of a possible module (400) is described in Figure 13. The module may include a processor (4001) for managing the liquid height and pressure measurements, a liquid height measuring circuit (4002), a pressure gauge (4004), a display (4003) for displaying the liquid height and pressure, and a power source (4004) that may be a rechargeable battery. The module may also include a transmitter (4006) for transmitting measured data from the module to an external receiver such as mobile phone, and a vibration energy harvester (4007) for recharging the battery and for powering the different system in module (400).

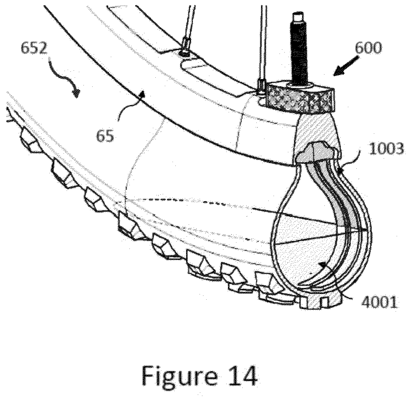

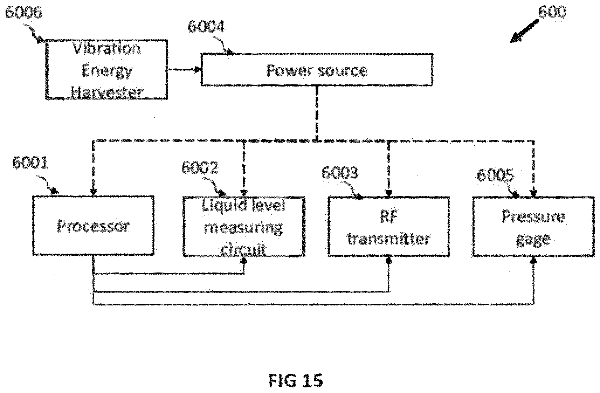

Another embodiment of a sensor for measuring the height of sealant (1001) through its electric properties is described in Figure 14, showing a module (600) that is designed to be fixed to the rim (65) and includes the tire valve (64). A schematic of a possible module (600) is described in Figure 15. The module may include a processor (5001) for managing the liquid height and pressure measurements, a liquid height measuring circuit (5002), a pressure gauge (5005), a transmitter (5003) for transmitting measured data from the module to an external receiver such as mobile phone and a power source (5004) that may be a rechargeable battery. The module may also include a vibration energy harvester (5006) for recharging the battery and for powering the different systems in module (500). The module may also be fixed inside the rim.

An embodiment of the present invention refers to the a system (100) for measuring a liquid level (1001) inside a tire (1002) that comprises the first electrode (901) and the second electrode (902) that are designed to be positioned inside the tire in such a way that they can be immersed inside the liquid that the tire (1000) may contain, and an electric circuit (1004) that is electrically connected to the two electrodes. The system is designed to measure an electric property of the liquid between the two electrodes, wherein an intensity of said electric property depends on the liquid level inside the tire. The electric circuit (1004) is designed to output an electric value for the measured electric property as an output signal (1005). The output signal can be used to calculate the level of the liquid inside the tire. The electric property can be a resistance or a capacitance of the liquid.

The system, when said electric circuit (1004) comprises a resistor (12) connected from a first side (121) to one of said two electrodes (101) and from a second side (122) to a first terminal (131) of a pulse generator (13); wherein a second of said two electrodes (102) is connected to a second terminal (132) of the pulse generator (13); wherein said pulse generator can generate a pulse with a positive and negative polarity that can generate a pulse of voltage drop on said resistor wherein said pulse of voltage drop serves as said output signal (1005).

The system, wherein a resistance value of said resistor is greater than a half of a resistance value between said two electrodes when ten percent of them are covered with said liquid.

The system wherein said electric circuit (1004) comprises an oscillator (20) that is electrically connected to the electrodes; wherein said oscillator is designed to produce oscillating electronic signals in a frequency that is depends on said capacitance of said liquid and wherein said frequency serves as said output signal (1005).

The system wherein the system includes an alternating power source (30), a measuring system (33) and an inductor (32), and wherein said two electrodes comprise a first electrode (311) and a second electrode (312). The measuring system is connected in parallel to the two electrodes and is designed to measure alternating voltage between the two electrodes. A first terminal (301) of the alternating power source is electrically connected to a first terminal (321) of the inductor, and a second terminal (302) of the alternating power source is electrically connected to the second electrode, and wherein a second terminal (322) of the inductor is electrically connected to the first electrode. The alternating power source can induce electrical voltage at varying frequencies in a way that enable the measuring system to detect a peak of the alternating voltage on the two electrodes, or induce a voltage or current pulse that causes an alternating current to flow between a capacitance formed between the two electrodes and the inductor in a certain oscillating frequency; and wherein changes in said peak alternating voltage or changes in a frequency of said alternating current can be used to calculate said liquid level inside the tire.

The system wherein said oscillator is kind of a Ring Oscillator, Colpitts Oscillator, Pierce Crystal Oscillator, CMOS Crystal Oscillator, Microprocessor Oscillator, Hartley Oscillator, RC Oscillator, Wien Bridge Oscillator, or Twin-T Oscillator or 555 timer chip configured as an oscillator.

The system that further includes two valve electric pads (63) that are connected to said electrodes and are designed to be assembled on an outer side (651) of a rim (65) to which the tire is intended to be placed, and are designed to connect said two electrodes to said electric circuit (1004).

The system wherein said valve electric pad (63) is designed to electrically communicate with a module (500) that include an electric pads (67) in a way that enables the valve electric pad (63) to measure said electric properties; wherein the module includes a rechargeable battery, an on/off button (68), a measuring circuit for measuring said electric property and a display (69) that can display said liquid level inside the tire.

The system that further includes a pressure gauge for measuring pressure inside the tire to be displayed on said display or an RF transmitter for transmitting data from the system to a receiver.

The system that further includes a module (600) that comprises said electric circuit, a transmitter and a rechargeable battery for powering the module; wherein said module is designed to be assembled on an outer side (651) of a rim (65) to which the tire is intended to be placed, and wherein said transmitter is designed to transmit data from the said system to a receiver.

The system that further includes a pressure gauge for measuring pressure inside the tire, a processor for managing a measurement process of the system, a vibration energy harvester for converting vibration energy into electric energy wherein said electric energy can be used to charge said rechargeable battery or said module.

A more detailed embodiment refers to a system for measuring the height of the liquid level of liquid inside the tire that includes a stem (64S) of the tire pressure valve (64) that comprises a base, the first electrode (901), a second electrode (902), and an electrically isolated part (992) between the first electrode and the second electrode. Usually, the tire pressure valve (64) that includes the inner valve mechanism (996) also includes a lower grommet (993), an upper grommet (991), a locknut (997), and a cap, and in the present embodiment a locknut (994) that connect the extensions and the lower parts to the rim. In the present embodiment there is an isolator plate (995) between the ends of the electrodes.

The stem of the tire pressure valve is designed to be fixed to the rim of the tire in such a way that an upper part (901U) of the first electrode and an upper part (902U) of the second electrode are deigned to be protrude outside (651) the rim and a lower part (901L) of the first electrode and a lower part (902L) of the second electrode are deigned to be protrude inside (652) the rim.

The lower part of the first electrode or a first extension (901E) that is connected to the lower part of the first electrode is designed to be positioned inside the tire in such a way that the lower part of the first electrode or the first extension is capable to be immersed inside liquid inside the tire when the tire pressure valve faces the ground. The lower part of the second electrode or a second extension (902E) that is connected to the lower part of the second electrode is designed to be positioned inside the tire in such a way that the lower part of the second electrode or the second extension is capable to be immersed inside the liquid inside the tire when the tire pressure valve faces the ground.

The upper parts of the electrodes are designed to be electrically connected to the power source, and to the electric circuit that is designed to measure the electric property of the liquid between the lower parts of the electrodes or between their extensions. The intensity of the electric property depends on the height of the liquid level of the liquid inside the tire. The electric circuit is designed to output an electric value as an output signal for the measured electric property, and this output signal represents and is capable to be used to calculate the height of the liquid level inside the tire.

Another embodiment of the present invention is an in-tire system (800) when the pressure tire valve (700) is a standard one. The parts and principles are basically the same of the other embodiments, such as the electrodes. The in-tire system comprises a kinetic energy harvester (8001) that harvest energy from the tire vibration, a power management circuit (8002) that converts the electrical power of the kinetic energy harvester to a DC power, a rechargeable battery (8003) that is charged by the kinetic energy harvester through a charging circuit (8004), an electric circuit (8005) as described in this disclosure regarding the previous embodiments, for measuring liquid level height, a pressure sensor (8006) for measuring tire pressure, a processor (8007) for managing the measurement of the liquid level and pressure level and transmission of the data to a receiver (8009), through an RF transmission module (8008).

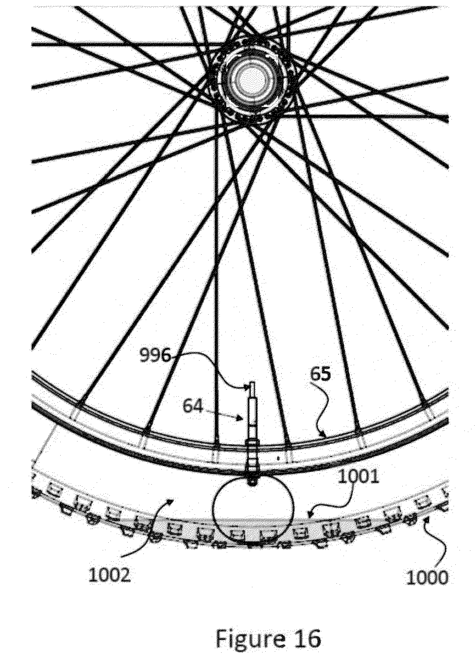

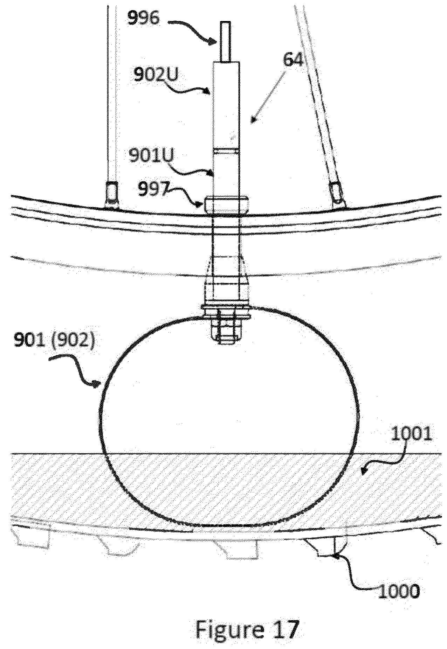

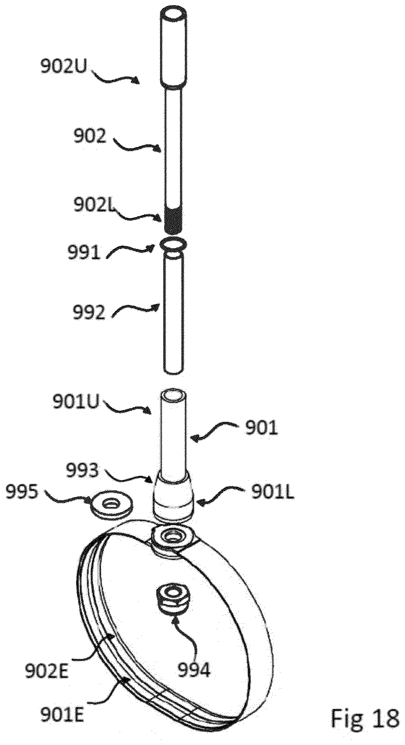

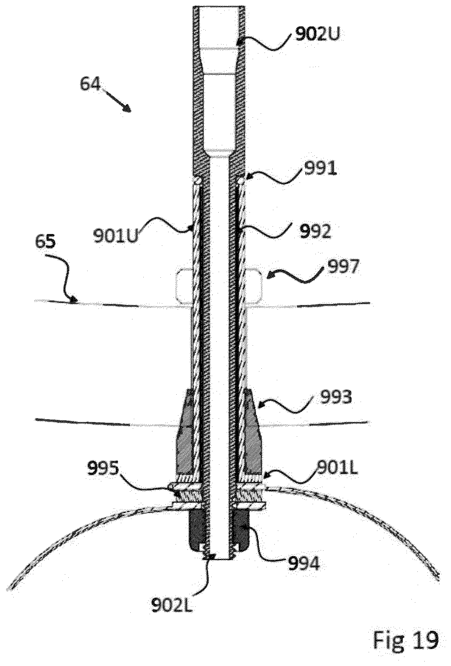

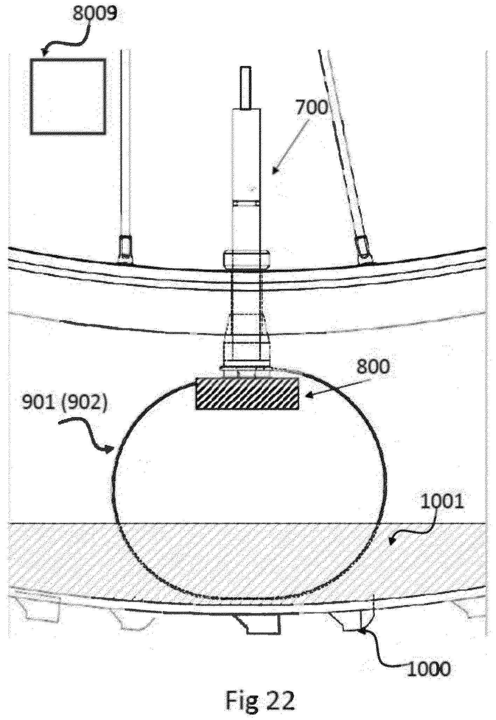

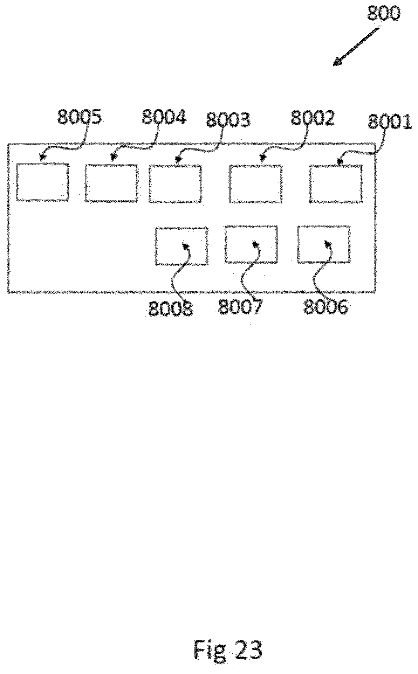

Figures 16 and 17 describe schematically the pressure tire valve 64 inside the tire, Figure 18 describes schematically the stem 64S of the tire pressure valve and the extensions, Figure 19 describes schematically the pressure tire valve 64 inside the tire, Figures describe schematically the stem 64S and the extensions, Figure 22 depicts schematically the in-tire system (800), and Figure 23 is a graphic description of the in-tire system (800).

The present invention refers in fact also to a system for detecting the presence of liquid inside the wheel. The system includes the tire pressure valve, the power source, the electric circuit, and the indication means (1111). As stated above, the tire pressure valve comprises the stem, the first electrode, the second electrode, the electrically isolated part between the electrodes, and the pressure valve mechanism.

The tire pressure valve is designed to be fixed to the rim in such a way that the upper parts of the electrodes are positioned outside the rim and the lower parts of the electrodes are positioned between the rim and the inner side of the tire and are capable to be immersed inside the liquid when presence inside the tire when the tire pressure valve faces the ground. The upper parts of the electrodes are designed to be connected electrically to the power source, and to the electric circuit that is designed to output a signal when liquid presence between the lower parts of the electrodes, and the indication means is designed to indicate when the electric circuit outputs the signal when liquid presence between the lower parts of said electrodes. The indication means can be a LED that is designed to be lightening when the electric circuit outputs the signal when liquid presence between the lower parts of the electrodes. The electrical circuit can be designed in a way that electrical property of the liquid depends on a level height of the liquid in said tire and wherein an intensity of the light of the LED depends on the current intensity and wherein the intensity of light symbolizes the level height of the liquid in the wheel. Light intensity is weak or strong depending on the height of the liquid level.

The electrical circuit can include a plurality of secondary circuits (1004A) and the indication means comprises a plurality of LEDs (1111). In such case, the electrical circuit is designed to activate one or more specific secondary circuits (1004B) according to the electrical properties of the liquid between the two lower parts of the electrodes that is affected by a height level of the liquid in the tire, and the LEDs (xx) that are turned on symbolizes the level height of the liquid in the wheel.

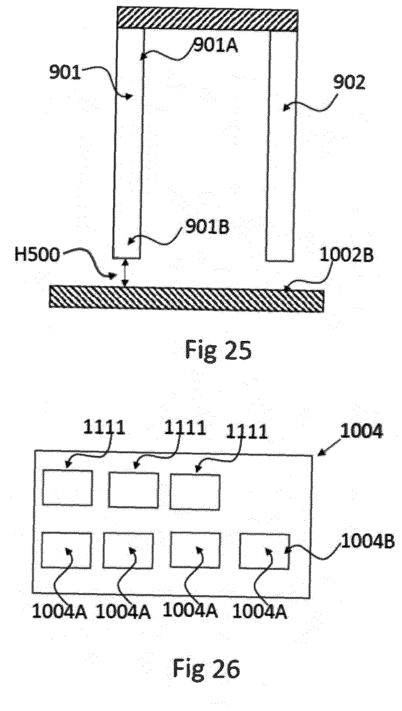

The length (H901) of at least one electrode (901A) out of the electrodes can be of such size that when the tire pressure valve is mounted on the wheel then a lower end (901B) of the at least one electrode is at a certain height (H500) from a bottom (1002B) of the tire when the tire pressure valve faces the ground so that liquids up to the certain height level do not come into contact with the at least one electrode when the tire pressure valve faces the ground. Such a structure of the system makes it possible to perform a very reliable test of whether there is liquid between the lower ends of the electrodes or no liquid, and to make a reliable indication (for example, a light is on or off). The idea is that as soon as the light, for example, is not lit, the user understands that there is liquid, but at a very low level and must be filled as soon as possible. The lower part of the electrodes (or their extensions) can be in the form of a ring (possible flexible) as depicted in the drawings for example of the two electrodes when they are parallel and between them the separating part. The bottom of the ring can be made of a material that is not electrically conductive, to create the aforementioned elevation, as described for example in Figure number 24. Figure 25 depicts schematically the at least one electrodes 901A and Figure 26 depicts schematically the secondary circuits (1111) and the LEDs (1004A). The first electrode (901) may be separated from the second electrode (902) by a slot or a gap (910), such that no liquid may accumulate between above the level of the liquid and distort the reading of the liquid level height. In addition to that, the bottom ends 901G and 902G may be made of a nonconductive material and to assist to position the electrodes in a desired height from the bottom of the tire.

In all previous embodiments two electrodes are used as electrodes such that the sealing liquid makes an electrical connection between them and such that as the height level of the sealing liquid changes the resistance of the liquid between the two electrodes changes and is used to measure the height level of the liquid.

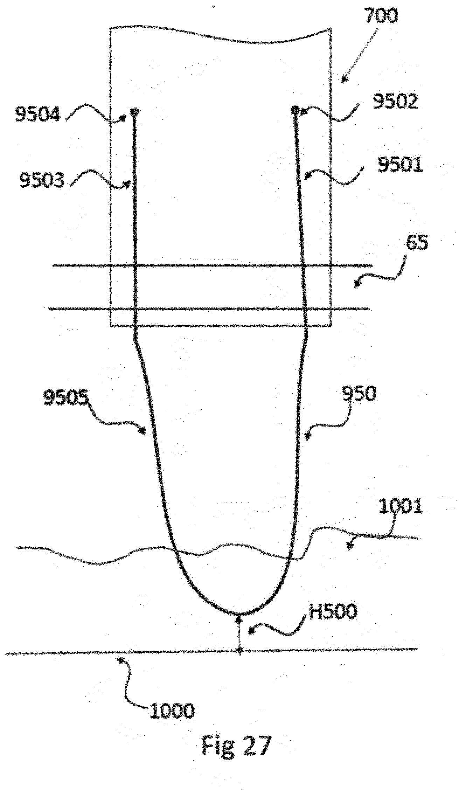

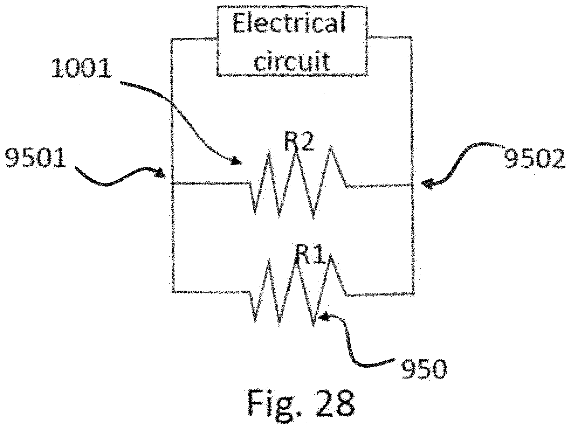

In another embodiment of the present invention it is possible to use one electrode. This embodiment is described in Figures 27 and 28. In this embodiment the one electrode (950) is made of a conductive material with resistance R1. The sealing liquid (1001) serves as an electrical shunt with resistance R2 as shown in Figure 28. R2 increases with the decrease height level (1001h) of the sealing liquid (1001).

The overall resistance of the electrode-sealing liquid as measured between two ends (9501) (9502) of the one electrode is:
The following are two examples.

Example 1: Assume that R1=R2(h0) where h0 is a predetermined recommended sealing liquid level. In this case R(h0)=R1/2. As h decreases R2 increases and R becomes smaller. When h=0, R2 infinity and R(0)=R1. In this case the value of R(h) changes from R(h0)=R1/2 to R(0)=R1, and serves as an indication to the level height of the sealing liquid.

Example 2: Assume that R1=10R2(h0). In this case R(h0)=R2. As h decreases, R2 increases and when h=0 R2 infinity and R(0)=R1. In this case R changes from R(h0)=R2 (low resistance) to R(0)=R1 (high resistance) and serves as an indication to the level height of the sealing liquid.

The electrode may be for example conductive and preferably hydrophobic polymer such as conductive silicone, carbon or bronze filled PTFE. The electrodes may be made of high resistance alloy such as made of Nickel and Chrome. The electrodes may also be coated by hydrophobic layer to prevent liquid drying on the electrodes.

The one electrode may be as described in Fig. 27 but it may also be part of the tire or glued to the inner side of the tire. The one electrode (950) should be made of or coated with a material that is both conductive and water repellent. This is to prevent the water from sticking to the one electrode for a relatively long period of time, perhaps several seconds. So that the liquid will not stick to the one electrode and change its resistance; (the resistance of the part (9503) of the one electrode that is not immersed in the liquid).

The sealing liquid is typically electrically conductive when in a liquid state. When dried the liquid may not be electrically conductive. Therefore, when the sealing liquid dries on the electrode it creates an electrical barrier that prevents measurement of the liquid resistivity. It is possible to add substance to the liquid such that it retains its electrical conductivity when dried. Such substance may be for example metallic particles, graphite, conductive molecules. The substance may be designed to have similar density as the liquid yielding none-significant volume separation between the added substance and the liquid. The added substance may be electrically conductive molecules that bind to the liquid molecules such that the volume separation between the molecule and the liquid molecules is reduced or completely eliminated.

The embodiment of the present invention refers to all the systems and method described above but uses the one electrode instead of two. All of the above also applies to the system with the one electrode with the necessary and logical changes. In summary, the main embodiment of the present invention refers to a system for detecting the presence of the liquid inside the wheel that includes a tire pressure valve, a power source, an electric circuit, and an indication means.

The tire pressure valve includes a stem, a pressure valve mechanism, and one electrode (950). The one electrode (950) includes a first end segment (9501) that is ended with a first end (9502) of the one electrode, and a second end segment (9503) that is ended with a second end (9504) of the one electrode.

The tire pressure valve is designed to be fixed to the rim of the wheel in such a way that the first and the second end segments are positioned outside the rim and a central part (9505) of the electrode is positioned between the rim and the inner side of the tire and is capable to be immersed inside liquid when presence inside the tire when the tire pressure valve faces the ground. The first and second ends of the one electrode are designed to be connected electrically to the power source, and to the electric circuit that is designed to output the signal that reflects resistance between the first end and the second end of the one electrode. The magnitude of resistance between these first and second ends is designed to be changed from a situation where no liquid covers any part of the central part of the one electrode to a situation where liquid covers all or a part (9506) of the central part. This magnitude of the measured resistance is designed to indicate presence of liquid in the tire as well as a level of liquid in the tire. The indication means is designed to indicate presence of liquids inside the tire or presence of liquids inside the tire and also the level of the liquids, based on the electric circuit outputs signal.

The indication means may be a LED that is designed to be lightening when the electric circuit outputs the signal when liquid covers at least a part of the central part (9506) of the one electrode. The

The electrical circuit may include a plurality of secondary circuits and the indication means includes a plurality of LEDs. In this case, the electrical circuit is designed to activate one or more specific secondary circuits according to the electrical properties of the liquid that covers at least a part of the central part of the electrode that is affected by a height level of the liquid in the tire. The LEDs that are turned on symbolizes the level height of the liquid in the wheel.

The electric circuit may further designed to measure an electric property of the liquid between the first and second ends of the one electrode. The lowest point (9507) of the central part of the one electrode may be designed to be positioned inside the tire at the certain height (H500) from the bottom of the tire when the tire pressure valve faces the ground so that liquids up to that certain height level do not come into contact with the one electrode when the tire pressure valve faces the ground. The electric circuit may include a resistor connected from a first side to the first end of the one electrode and from a second side to a first terminal of a pulse generator, and the second end of the one electrode is connected to the second terminal of the pulse generator. The electric circuit may be the oscillator that is electrically connected to the first and second ends of the one electrode. The system may further include a measuring device and an inductor. The measuring device is connected in parallel to the first and second ends of the one electrode and is designed to measure alternating voltage between the first and second ends of the one electrode.

Another embodiment of the present invention refers to an in-tire system for measuring the height of the liquid level of liquid inside the wheel, based on the same principles of the one electrode as stated above, and may include the followings:
The one electrode (950) with the first end segment (9501) that is ended with the first end (9502) of the one electrode, the second end segment (9503) that is ended with the second end (9504) of the one electrode, and the central part (9505).

The kinetic energy harvester that is designed to harvest energy from vibrations of the tire of the wheel; The power management circuit that is designed to converts electrical power of the kinetic energy harvester to a DC power; The rechargeable battery that is designed to be charged by the kinetic energy harvester through a charging circuit; The electric circuit; The pressure sensor that is designed to measure tire pressure; The processor that is designed to manage measurements of the height of the liquid level of the liquid inside the wheel and tire pressure levels, and the transmission module that is designed to transmit data of the measurements to the receiver that is positioned outside the tire. The rechargeable battery is designed to power the electric circuit, the pressure sensor, the processor, and the transmission module.

The one electrode is designed to be positioned inside the tire in such a way that the central part is capable to be immersed inside the liquid inside the tire when the electrodes face the ground. The first and second ends are designed to be connected electrically to the power source, and to the electric circuit that is designed to output a signal that reflects resistance between the first end and the second end of the electrode.

The magnitude of resistance between the first and second ends is designed to be changed from a situation where no liquid covers any part of the central part of the one electrode to a situation where liquid covers all or a part of the central part. The magnitude of the measured resistance is designed to be used by the processor to calculate the height of the liquid level inside the tire and to indicate presence of liquid in the tire as well as a level of liquid in the tire. The indication means is designed to indicate presence of liquids inside the tire and a level of the liquids based on the electric circuit outputs signal.

Another embodiment of the present invention refers to the stem of the tire pressure valve that includes a base and the one electrode (950). Here too the stem is designed to be fixed to the rim of the tire in such a way that the first and the second segments of the one electrode are deigned to be protrude out of the rim and the central part of the one electrode is deigned to be protrude inside the rim. The central part is designed to be positioned inside the tire in such a way that the central part is capable to be immersed inside liquid inside the tire when the tire pressure valve faces the ground.

The first and second ends of the one electrode are designed to be electrically connected to the power source, and to the electric circuit that is designed to output the signal that reflects resistance between the first end and the second end of the electrode, that as mentioned is changed from the situation where no liquid covers any part of the central part of the electrode to the situation where liquid covers all or a part of the central part, and the magnitude of the resistance is designed to indicate presence of liquid in the tire as well as the level of liquid in the tire..

## Claims

1. A system for detecting a presence of liquid inside a wheel, comprising:
a tire pressure valve,
a power source,
an electric circuit; and
an indication means;
wherein the tire pressure valve comprises a stem, a first electrode, a second electrode, an electrically isolated part between the first electrode and the second electrode, and a pressure valve mechanism,
wherein the tire pressure valve is designed to be fixed to a rim of the wheel in such a way that upper parts of the electrodes are positioned outside the rim and lower parts of the electrodes are positioned between the rim and the inner side of the tire and are capable to be immersed inside liquid when presence inside the tire when the tire pressure valve faces the ground;
wherein the upper parts of said electrodes are designed to be connected electrically to the power source, and to the electric circuit that is designed to output a signal when liquid presence between the lower parts of said electrodes; and
wherein the indication means is designed to indicate when the electric circuit outputs the signal when liquid presence between the lower parts of said electrodes.

2. The system of claim 1 wherein said indication means is a LED that is designed to be lighten when said electric circuit outputs said signal when liquid presence between said lower parts of said electrodes.

3. The system of claim 2 wherein said electrical circuit is designed in a way that electrical property of said liquid depends on a level height of said liquid in said tire and wherein an intensity of said light of said LED depends on said current intensity and wherein said intensity of light symbolizes the level height of the liquid in the wheel.

4. The system of claim 1 wherein said electrical circuit includes a plurality of secondary circuits and wherein said indication means comprises a plurality of LEDs; wherein the electrical circuit is designed to activate one or more specific secondary circuits according to the electrical properties of the liquid between said two lower parts of said electrodes that is affected by a height level of said liquid in said tire; and wherein LEDs that are turned on symbolizes the level height of the liquid in the wheel.

5. The system of claim 1, that further includes a transmitter that is designed to transmit data from the system to a receiver, wherein said power source is a rechargeable battery or a vibration energy harvester for converting vibration energy into electric energy, and wherein the rechargeable battery or the vibration energy harvester for converting vibration energy into electric energy, the transmitter, and said electric circuit are housed inside a module that is designed to be connected to said upper parts of said electrodes when said tire pressure valve is assembled on said rim.

6. The system of claim 1 wherein said electric circuit is further designed to measure an electric property of liquid between said lower parts of said electrodes, wherein an intensity of said electric property depends on a height of a liquid level of said liquid inside the tire, wherein said electric circuit is designed to output an electric value as an output signal for the measured electric property, and wherein said output signal represents the height of the liquid level inside the tire and is capable to be used to calculate the height of the liquid level inside the tire; and wherein the system is further includes a pressure gauge for measuring pressure inside said tire and a processor for managing a process of said calculation.

7. The system of claim 1 wherein a length of at least one electrode out of said electrodes is of such size that when said tire pressure valve is mounted on said wheel then a lower end of the at least one electrode is at a certain height from a bottom of said tire when the tire pressure valve faces the ground so that liquids up to said certain height level do not come into contact with the at least one electrode when the tire pressure valve faces the ground.

8. The system of claim 2 wherein a length of at least one electrode out of said electrodes is of such size that when said tire pressure valve is mounted on said wheel then a lower end of the at least one electrode is at a certain height from a bottom of said tire when the tire pressure valve faces the ground so that liquids up to said certain height level do not come into contact with the at least one electrode when the tire pressure valve faces the ground.

9. The system of claim 5 wherein a length of at least one electrode out of said electrodes is of such size that when said tire pressure valve is mounted on said wheel then a lower end of the at least one electrode is at a certain height from a bottom of said tire when the tire pressure valve faces the ground so that liquids up to said certain height level do not come into contact with the at least one electrode when the tire pressure valve faces the ground.

10. The system of claim 6 wherein a length of at least one electrode out of said electrodes is of such size that when said tire pressure valve is mounted on said wheel then a lower end of the at least one electrode is at a certain height from a bottom of said tire when the tire pressure valve faces the ground so that liquids up to said certain height level do not come into contact with the at least one electrode when the tire pressure valve faces the ground.

11. The system of claim 6, wherein said electric property is resistance of said liquid, and wherein said electric circuit comprises a resistor connected from a first side to said first electrode and from a second side to a first terminal of a pulse generator; wherein said second electrodes is connected to a second terminal of the pulse generator; wherein said pulse generator is designed to generate a pulse that is designed to generate a pulse of voltage drop on said resistor wherein said pulse of voltage drop serves as said output signal.

12. The system of claim 6, wherein said electric property is capacitance of said liquid, and wherein said electric circuit comprises an oscillator that is electrically connected to said electrodes; wherein said oscillator is designed to produce oscillating electronic signals in a frequency that depends on said capacitance of said liquid and wherein said frequency serves as said output signal.

13. The system of claim 6, wherein said electric property is capacitance of said liquid, wherein said power source is an alternating power source and wherein the device further includes a measuring device and an inductor;
wherein said measuring device is connected in parallel to said electrodes and is designed to measure alternating voltage between said electrodes;
wherein a first terminal of the alternating power source is electrically connected to a first terminal of the inductor, and a second terminal of the alternating power source is electrically connected to the second electrode, and wherein a second terminal of the inductor is electrically connected to said first electrode;
wherein the alternating power source is capable to induce electrical voltage at varying frequencies in a way that enable the measuring device to detect a peak of the alternating voltage on said electrodes, or induce a voltage or current pulse that causes an alternating current to flow between a capacitance formed between said electrodes and the inductor in a certain oscillating frequency; and wherein changes in said peak alternating voltage or changes in a frequency of said alternating current are capable to be used to calculate said liquid level inside the tire.

14. An in-tire system for measuring a height of a liquid level of liquid inside a wheel, comprising:
a first electrode,
a second electrode,
a kinetic energy harvester that is designed to harvest energy from vibrations of a tire of the wheel,
a power management circuit that is designed to converts electrical power of the kinetic energy harvester to a DC power,
a rechargeable battery that is designed to be charged by the kinetic energy harvester through a charging circuit,
an electric circuit,
a pressure sensor that is designed to measure tire pressure,
a processor that is designed to manage measurements of the height of the liquid level of the liquid inside the wheel and tire pressure levels,
a transmission module that is designed to transmit data of said measurements to a receiver that is positioned outside the tire;
wherein rechargeable battery is designed to power the electric circuit, the pressure sensor, the processor, and the transmission module;
wherein the electrodes are designed to be positioned inside the tire in such a way that their lower parts are capable to be immersed inside the liquid inside the tire when the electrodes face the ground;
wherein the electric circuit is designed to be connected to said electrodes for measuring an electric property of the liquid between the electrodes and wherein the intensity of said measured electric property depends on the height of the liquid level of the liquid inside the tire; and
wherein the electric circuit is designed to output an electric value as an output signal for said measured electric property, and wherein said output signal represents the height of the liquid level inside the tire and is capable to be used by the processor to calculate the height of the liquid level inside the tire.

15. A stem of a tire pressure valve, comprising:
a base,
a first electrode,
a second electrode, and
an electrically isolated part between the first electrode and the second electrode;
wherein the stem of the tire pressure valve is designed to be fixed to a rim of a tire in such a way that an upper part of the first electrode and an upper part of the second electrode are deigned to be protrude out of the rim and a lower part of the first electrode and a lower part of the second electrode are deigned to be protrude inside the rim;
wherein the lower part of the first electrode or a first extension that is connected to the lower part of the first electrode is designed to be positioned inside the tire in such a way that the lower part of the first electrode or the first extension of the first electrode is capable to be immersed inside liquid inside the tire when the tire pressure valve faces the ground;
wherein the lower part of the second electrode or a second extension that is connected to the lower part of the second electrode is designed to be positioned inside the tire in such a way that the lower part of the second electrode or the second extension of the second electrode is capable to be immersed inside the liquid inside the tire when the tire pressure valve faces the ground;
wherein said upper parts of said electrodes are designed to be electrically connected to a power source, and to an electric circuit that is designed to measure an electric property of liquid between the lower parts of said electrodes or between their extensions, wherein an intensity of said electric property depends on a height of a liquid level of the liquid inside the tire;
wherein the electric circuit is designed to output an electric value as an output signal for the measured electric property; and
wherein said output signal represents the height of the liquid level inside the tire and is capable to be used to calculate the height of the liquid level inside the tire.
